(19) Europäisches Patentamt / European Patent Office / Office européen des brevets

(11) **EP 4 741 356 A1**

(12) **EUROPEAN PATENT APPLICATION**

(43) Date of publication:
**13.05.2026 Bulletin 2026/20**

(21) Application number: 25214203.9

(22) Date of filing: **07.11.2025**

(51) International Patent Classification (IPC):
**C03B 23/22** (2006.01) **G02B 7/02** (2021.01)

(52) Cooperative Patent Classification (CPC):
**G02B 7/025; C03C 27/10;** G02B 7/021

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.11.2024 JP 2024197580**
**17.10.2025 JP 2025175424**

(71) Applicant: **Canon Kabushiki Kaisha**
**Tokyo, 146-8501 (JP)**

(72) Inventors:
• **HOSHINO, Kazuhiro**
**Tokyo (JP)**
• **FUKUSHIMA, Hirotaka**
**Tokyo (JP)**

(74) Representative: **WESER & Kollegen**
**Patentanwälte PartmbB**
**Radeckestraße 43**
**81245 München (DE)**

(54) **OPTICAL ELEMENT UNIT, MANUFACTURING METHOD FOR OPTICAL ELEMENT UNIT, AND OPTICAL APPARATUS**

(57) Provided is an optical element unit including a first optical element and a second optical element, wherein the first optical element and the second optical element are bonded to each other through intermediation of a bonding portion formed by solid-phase bonding of an inorganic substance between a peripheral edge portion of the first optical element and a peripheral edge portion of the second optical element, and wherein the optical element unit has, between the first optical element and the second optical element which are bonded to each other, a hollow portion formed on an inner side of the peripheral edge portion.

## FIG. 1

100

EP 4 741 356 A1

**Description**

TECHNICAL FIELD

The present disclosure relates to an optical element unit in which a plurality of optical elements are combined.

BACKGROUND

An optical element unit in which a plurality of optical elements including lenses, mirrors, filters, sensors, and the like are combined and integrated is widely used in a camera, a telescope, a microscope, and a camera of a portable electronic product, and even in an image sensor module.

In recent years, in order to enhance the imaging performance of the optical element unit, there have been demands for the optical elements to be unified with a high positional accuracy.

In Japanese Patent Laid-Open No. 2007-195167, in order to perform highly-accurate imaging control and obtain an excellent-quality image in an image sensor module, at the time of bonding lenes or bonding a lens to an image sensor chip, a plurality of spacers are provided between bonding layers to improve the positional accuracy.

In Japanese Patent Laid-Open No. 2005-292441, as a manufacturing method for an optical element unit in which two or more transparent resin lenses are caused to adhere to each other, there is disclosed a method involving using a lens containing an infrared absorbing agent as at least one of the transparent resin lenses, and irradiating a bonding portion with infrared rays to weld and bond the lens to the other lens.

SUMMARY

The present disclosure is directed to providing an optical element unit having a high environmental resistance and a good optical characteristic.

The present disclosure in its first aspect provides an optical element unit as specified in claim 1. Optional features are specified in claims 2 to 16.

The present disclosure in its second aspect provides a manufacturing method for an optical element unit of manufacturing an optical element unit as specified in claim 18. Optional features are specified in claims 19 to 21.

The present disclosure in its third aspect provides an optical apparatus as specified in claim 17.

According to the present disclosure, it is possible to provide a technology advantageous in achieving an optical element unit having a high environmental resistance and a good optical characteristic.

Features of the present disclosure will become apparent from the following description of embodiments with reference to the attached drawings. The following description of embodiments is described by way of example.

BRIEF DESCRIPTION OF THE DRAWINGS

Fig. 1 is a schematic cross-sectional view of an optical element unit according to the present disclosure.

Fig. 2A is a schematic view for illustrating an example of an inorganic film for bonding optical elements in the present disclosure.

Fig. 2B is a cross-sectional view for illustrating an example of the optical element unit according to the present disclosure.

Fig. 2C is a schematic view for illustrating an example of an inorganic film of the optical element unit in the present disclosure.

Fig. 2D is a schematic view for illustrating another example of the inorganic film for bonding the optical elements in the present disclosure.

Fig. 2E is a cross-sectional view for illustrating another example of the optical element unit according to the present disclosure.

Fig. 2F is a schematic view for illustrating another example of an inorganic film of the optical element unit in the present disclosure.

Fig. 3 is a schematic view for illustrating an optical element unit including an anti-reflection film in the present disclosure.

Fig. 4 is a cross-sectional SEM image of an optical element unit obtained by bonding by an inorganic film in the present disclosure.

Fig. 5A is a schematic view of a vacuum film-forming apparatus in the present disclosure.

Fig. 5B is a top view of an optical element (506) and a blocking plate (507).

Fig. 6A is a schematic view for illustrating a cross section of a bonding apparatus in the present disclosure.

Fig. 6B is a schematic view for illustrating a state of the bonding apparatus in the present disclosure as viewed from the top.

Fig. 7A is a schematic view for illustrating a cross section of a vacuum film-forming bonding apparatus in the present disclosure.

Fig. 7B is a schematic view for illustrating a state of the vacuum film-forming bonding apparatus in the present disclosure as viewed from the top.

Fig. 8 is a schematic view for illustrating an example of an optical apparatus according to the present disclosure.

DESCRIPTION OF THE EMBODIMENTS

An embodiment of the present disclosure is described below with reference to the drawings. In the following description and the drawings, a component common to a plurality of drawings is denoted by a common reference symbol. Accordingly, common components are described with reference to the plurality of drawings mutually, and description of the components denoted by the common reference symbols is omitted as appropriate.

In bonding using an adhesive, the adhesive contracts at the time of curing, and it is thus difficult to increase the positional accuracy. Further, in a case of usage under a severe environment such as under a high-temperature and high-humidity environment, or in a case of usage under an environment having a large temperature or humidity change, the thickness of the adhesive layer changes due to not only moisture absorption and drying of the adhesive but also deterioration and alteration thereof. Further, when the lens is welded by infrared rays, as compared to the case of using an adhesive, the influence of the environmental change is reduced, but the lens is molten at the time of welding, and hence deformation occurs at this time and a slight positional misalignment occurs at the time of adhesion after the melting. Accordingly, it is difficult to obtain a positional accuracy of less than a micrometer order. Further, the optical element is limited to a resin material that absorbs infrared rays, and hence selection of an optical system becomes difficult.

An optical element unit according to the present disclosure is an optical element unit including a first optical element and a second optical element, in which the first optical element and the second optical element are bonded to each other through intermediation of a bonding portion formed by solid-phase bonding of an inorganic substance between a peripheral edge portion of the first optical element and a peripheral edge portion of the second optical element, and the optical element unit has, between the first optical element and the second optical element which are bonded to each other, a hollow portion formed on an inner side of the peripheral edge portion. Further, the optical element unit according to the present disclosure may further include a third optical element, and the second optical element and the third optical element may be bonded to each other through intermediation of a bonding portion formed by solid-phase bonding of another inorganic substance between the peripheral edge portion of the second optical element and a peripheral edge portion of the third optical element. In this case, between the second optical element and the third optical element which are bonded to each other, another hollow portion may be formed on the inner side of the peripheral edge portion. That is, the optical element unit according to the present disclosure may include three or more optical elements.

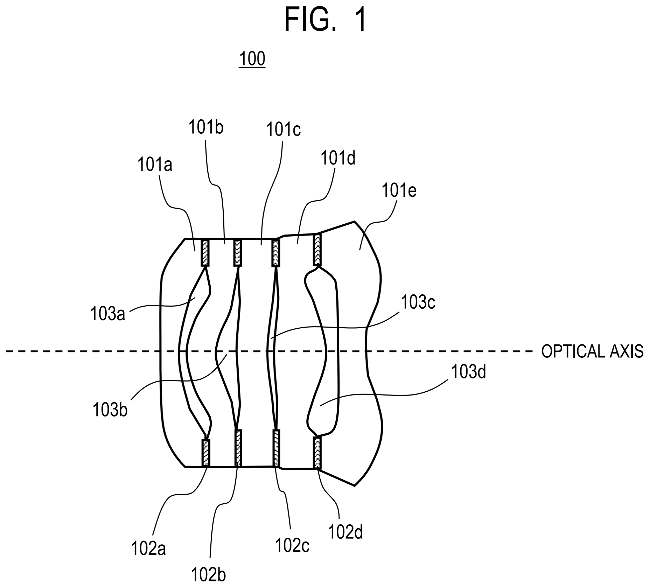

Fig. 1 is a schematic cross-sectional view of an optical element unit 100 according to this embodiment. The optical element unit 100 includes two or more optical elements. Fig. 1 shows an example of the optical element unit 100 including an optical element 101a, an optical element 101b, an optical element 101c, an optical element 101d, and an optical element 101e. The optical element 101a and the optical element 101b are caused to adhere to each other through intermediation of a bonding portion 102a formed by solid-phase bonding of an inorganic substance between a peripheral edge portion of an optical effective area of the optical element 101a and a peripheral edge portion of an optical effective area of the optical element 101 b. Similarly, the optical element 101b and the optical element 101c, the optical element 101c and the optical element 101d, and the optical element 101d and the optical element 101e are bonded to each other through intermediation of bonding portions 102b, 102c, and 102d, respectively, formed at peripheral edge portions of the respective optical elements. In this example, the optical element 101a and the optical element 101b may serve as the first optical element and the second optical element, respectively, or other optical elements adjacent to each other may serve as the first optical element and the second optical element. Further, any optical element adjacent to the second optical element may serve as the third optical element. In this case, the bonding portions 102a, 102b, 102c, and 102d may be solid-phase bonding between glasses, for example, when the optical elements are glass lenses.

Further, the optical element 101a and the optical element 101b include a hollow portion 103a in which at least parts excluding the bonding portion 102a (peripheral edge portion) are separated, between the optical element 101a and the optical element 101b. In addition, the optical element 101b and the optical element 101c, the optical element 101c and the optical element 101d, and the optical element 101d and the optical element 101e similarly include hollow portions 103b, 103c, and 103d, respectively. In this example, the hollow portions 103a, 103b, 103c, and 103d are formed at optical axis positions of the optical element unit 100.

The hollow portions 103a, 103b, 103c, and 103d covered with the optical elements 101a, 101b, 101c, 101d, and 101e are maintained to have a humidity lower than that of an atmospheric environment (space outside of the optical element unit). Specifically, the hollow portion can be set to have a humidity ratio of 2 g/kg or less.

The bonding portion may be an inorganic film formed by solid-phase bonding between an inorganic layer provided at the peripheral edge portion of the first optical element and an inorganic layer provided at the peripheral edge portion of the second optical element. The bonding state as used herein is assumed to be different from a state in which inorganic layers of two optical elements having the inorganic layers attached thereto are only in contact with each other at their surfaces. The bonding state represents a state of having such an adhesive strength that, for example, when a force to peel off the first optical element (for example, the optical element 101a) and the second optical element (for example, the optical element 101b) is applied, the optical elements are not peeled off even with a force of at least 0.05 N (5 g) or less. As an evaluation method, the bonded first optical element is hung, and the second optical element is suspended with a weight being installed thereon. At this time, whether the two bonded optical elements are peeled off is checked for evaluation. Further, as another simple evaluation method, whether the optical element unit is in an integrally holdable state (each optical element does not fall apart) may be checked only through use of the optical elements or the optical element unit having no lens barrel for holding the optical element unit.

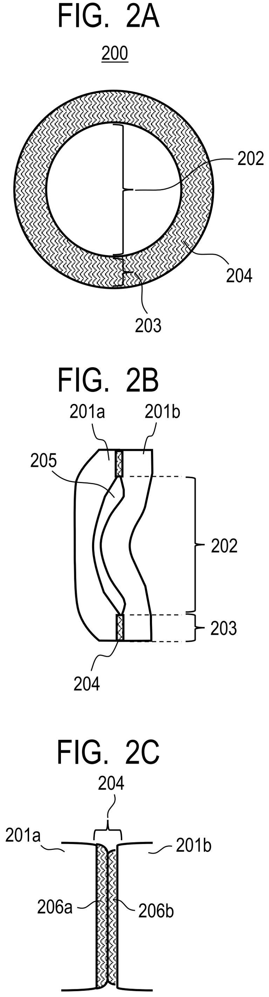

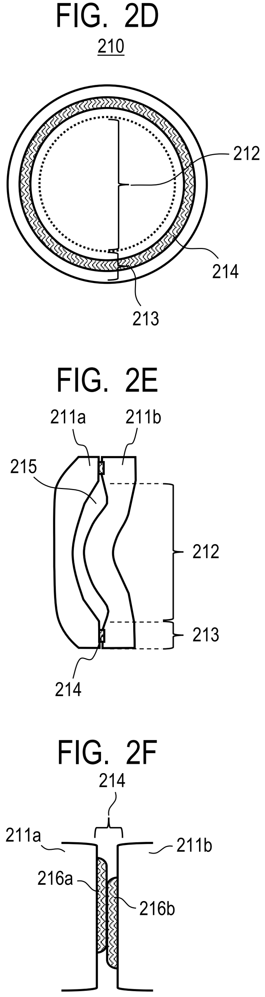

The bonding portion can be provided in a region that is at the peripheral edge portions of the first optical element and the second optical element and is outside the optical effective area. When the bonding portion is an inorganic film formed by solid-phase bonding between inorganic layers provided at the peripheral edge portions of the respective optical elements as described above, the inorganic film can include at least one selected from the group consisting of a metal film, an oxide film, a nitride film, and a fluoride film. In particular, a dielectric film (insulator film) typified by the oxide film, the nitride film, and the fluoride film has a high melting point, and hence has a high heat resistance and a small thermal expansion coefficient. Accordingly, the dielectric film (insulator film) has a higher environmental resistance and can more reduce the positional misalignment as compared to the metal film, and is thus suitable. Further, the dielectric film forms a bond achieved by a covalent bond or an ionic bond having a high bond strength, and hence the dielectric film is also suitable in that a stronger bond can be achieved as compared to a metallic bond and that oxygen and moisture blocking performance is high. The dielectric film may contain at least one of $SiO_2$, $Al_2O_3$, $Nb_2O_5$, $Ta_2O_5$, $HfO_2$, $MgO$, $Y_2O_3$, $ZrO_2$, $ZnO$, $MgF_2$, $AlF_3$, $AlN$, $Si_3N_4$, and $SiOC$. Moreover, usage of an oxide film containing a carbon atom and a hydrogen atom is more suitable because the film is likely to bond at a bonding interface via a bonding site of the carbon atom. Fig. 2A and Fig. 2D are views for illustrating states in which the inorganic film is formed on the optical element as viewed from an optical axis direction, and Fig. 2B and Fig. 2E are cross-sectional views of the optical elements bonded to each other by the above-mentioned inorganic film. Fig. 2C and Fig. 2F are enlarged views for illustrating the bonding portion. First, with reference to Fig. 2A and Fig. 2B, a formation region of the inorganic film to bond an optical element 201a and an optical element 201b to each other is described. A peripheral edge portion 203 of the optical element represents a peripheral edge portion on the outer side of an optical effective area 202 in which light is transmitted through the optical element. In this case, an optical element unit 200 is formed by forming and bonding, as one embodiment of an inorganic film 204 for bonding the two optical elements to each other, an inorganic film 204 (indicated by a wave pattern) on the entire surface of the peripheral edge portion 203 on the outer side of the optical effective area 202 as illustrated in Fig. 2A and Fig. 2B. Fig. 2C is an explanatory view for illustrating the bonding portion. The inorganic film 204 is formed by solid-phase bonding between an inorganic layer 206a on the optical element 201a and an inorganic layer 206b on the optical element 201b. Unlike bonding using a liquid-phase material such as an adhesive or solder, the inorganic film is a solid material, and hence a distance of the bonding portions bonded through intermediation of the inorganic film 204 (interval between the first optical element and the second optical element) is defined by a total film thickness of the inorganic layers 206a and 206b, and has a feature in that the distance is kept constant. A bonding surface is only required to ensure a predetermined bonding strength described above even though a surface area of the inorganic layer 206a on the optical element 201a and a surface area of the inorganic layer 206b on the optical element 201b do not match each other. Further, Fig. 2D and Fig. 2E are explanatory views for illustrating another embodiment. An optical element unit 210 may be formed by forming and bonding, in a formation region of the inorganic film for bonding an optical element 211a and an optical element 211b to each other, an inorganic film 214 (indicated by a wave pattern) in a part of a peripheral edge portion 213 on the outer side of an optical effective area 212 of the optical element. Fig. 2F is an explanatory view for illustrating the bonding portion. The inorganic film 214 may be formed so that parts of film surfaces are bonded to each other as in an inorganic layer 216a on the optical element 211a and an inorganic layer 216b on the optical element 211b. As shown in Figs. 2C and 2F, an air gap may exist between the inorganic layer 216a on the optical element 211a and the inorganic layer 216b on the optical element 211b. Further, as shown in Figs. 2C and 2F, an air gap may exist between the inorganic layer 216a on the optical element 211a and the optical element 211b, and an air gap may exist between the inorganic layer 216b on the optical element 211b and the optical element 211a. Further, the bonding may be performed through intermediation of only the peripheral edge portions with the inorganic layer being formed on the entire surface of the optical element to be bonded. However, it is assumed that, in any embodiment, the first optical element and the second optical element form a hollow portion that is closed by the bonding portion (inorganic film) and is covered with the two optical elements to be isolated from an external space. In this case, an area in which light that is not intended in the original optical design is transmitted due to scattering or multipath reflection between the optical elements is not defined as the optical effective area. The film thickness of the bonding portion (inorganic film) can be set to 0.1 nm or more and less than 1 μm. The first optical element and the second optical element may be formed of any material. Regardless of whether the materials are of the same type or different types, the optical elements can be bonded to each other through intermediation of the inorganic film by forming the inorganic layer on the optical element surface.

With hollow portions 205 and 215 being formed to have a humidity lower than that of the external space of the optical element units 200 and 210, occurrence of dew formation can be suppressed. Further, it is possible to suppress deterioration of the inorganic films 204 and 214 and the optical elements 201a, 201b, 211a, and 211b at the bonding portion due to the influence of moisture, and also suppress reduction in imaging performance due to moisture absorption. Moreover, the hollow portions 205 and 215 can be set to have a pressure that is equal to or less than an atmospheric pressure (for example, 101,325 Pa), and it is preferred that the pressure be less than the atmospheric pressure (for example, 101,325 Pa). A higher vacuum can reduce the humidity ratio and has an effect of reducing a saturation water vapor pressure, and is thus effective for suppression of dew formation. Further, a force is applied from the outside to the entire circumference of each of the optical element units 200 and 210 by the atmospheric pressure to make the optical elements further bonded to each other, thereby enabling sealing. Moreover, it is preferred that the hollow portion have a pressure equal to or less than 1/10 of the atmospheric pressure (for example, 101,325 Pa) from the viewpoint of suppressing dew formation. It is desired that the pressure of each of the hollow portions 205 and 215 have a pressure difference from the pressure of the external space of each of the optical element units 200 and 210 so that an external force caused by the pressure difference becomes equal to or less than an external force that does not cause each of the optical element units 200 and 210 to deform. The pressure of the hollow portion can be set to, for example, $1 \times 10^{-6}$ Pa or more.

For example, when the hollow portion is desired to be set to have a pressure that is 10 Pa or more and less than an atmospheric pressure, the following method can be considered. A rotary pump or a dry pump is used as a vacuum pump, and the inside of a chamber into which the optical elements to be bonded are put is evacuated down to a vacuum of several pascals. After that, the vacuum pump is stopped, and, while a pressure is monitored with a Pirani gauge or the like, the pressure is gradually increased by supplying a clean dry air (CDA) or a nitrogen gas. For example, when the pressure of the hollow portion is desired to be set to 100 Pa, the gas supply may be stopped when the pressure reaches 100 Pa, and then the optical elements may be bonded to each other. Further, for example, when the pressure of the hollow portion is desired to be set to from $10^{-6}$ Pa to less than 10 Pa, after the chamber is evacuated to a vacuum of several pascals through use of a rotary pump or a dry pump as a vacuum pump, the chamber is further evacuated down to a vacuum of $10^{-6}$ Pa with a cryopump or the like capable of adsorbing moisture. After that, the vacuum pump is stopped, and, while the pressure is monitored with an ionization gauge or the like, the pressure is gradually increased by introducing a clean dry air (CDA) or a nitrogen gas with a minute flow rate being controlled by a mass flow controller. For example, when the pressure of the hollow portion is desired to be set to 1 Pa, the gas supply may be stopped when the pressure reaches 1 Pa, and then the optical elements may be bonded to each other.

The optical element unit according to the present disclosure can include an anti-reflection film between the bonding portion and at least one of the first optical element and the second optical element. Also on the outer side of the optical effective area (peripheral edge portions) 203 and 213 described with reference to Fig. 2A to Fig. 2F, in some cases, light that is not intended in the original optical design enters the inorganic film 204 or the inorganic film 214 due to scattering or multipath reflection between the optical elements. Those cases include a case in which the light is reflected by the inorganic film 204 or the inorganic film 214 to cause an adverse effect such as flare and ghost at an imaging surface. Accordingly, it is desired to form the anti-reflection film between the inorganic film 204 and the optical element 201a or 201b to suppress flare and ghost to be caused by light reflected by the inorganic film.

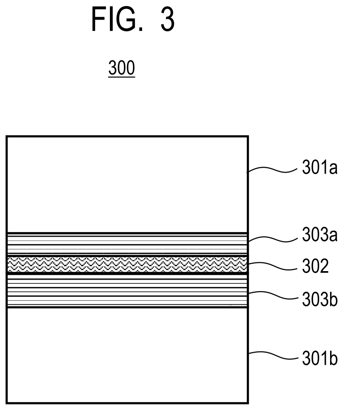

Fig. 3 is a schematic view for illustrating a cross section of a bonding portion of the optical element unit including the anti-reflection film. In an optical element unit 300 illustrated in Fig. 3, an anti-reflection film 303a is formed between an optical element 301a and an inorganic film 302, and an anti-reflection film 303b is formed between an optical element 301b and the inorganic film 302. With such a configuration, it is possible to suppress light reflected between the optical element and the inorganic film to suppress occurrence of flare and ghost. The bonding portion may extend between the hollow portion and at least one of the first optical element and the second optical element to function as an anti-reflection film in the optical path. Further, the inorganic film 302 may also have a function as a part or the whole of the anti-reflection film 303a or the anti-reflection film 303b. In addition, any one of the anti-reflection film 303a and the anti-reflection film 303b may be formed. In addition, a dielectric film is preferably used as an anti-reflection film, and when the bonding portion also serves as an anti-reflection film, the bonding portion (inorganic film) is preferably a dielectric film having a small light absorption rate, such as a film of $SiO_2$, $Al_2O_3$, $Nb_2O_5$, $Ta_2O_5$, $HfO_2$, $MgO$, $Y_2O_3$, $ZrO_2$, $ZnO$, $MgF_2$, $AlF_3$, $Si_3N_4$, $SiOC$, a film of a compound thereof, or a film of a mixture thereof.

A manufacturing method of manufacturing an optical element unit according to the present disclosure is a manufacturing method for an optical element unit of manufacturing an optical element unit by bonding a first optical element and a second optical element at peripheral edge portions thereof, and includes: preparing the first optical element and the second optical element in which an inorganic layer is provided in a region including a peripheral edge portion of a surface on a bonding side of at least one of the first optical element and the second optical element; and bonding the peripheral edge portions of the first optical element and the second optical element which are prepared so that a hollow portion is formed between the first optical element and the second optical element on an inner side of the peripheral edge portion. The bonding can be performed in vacuum (at a pressure less than an atmospheric pressure (101,325 Pa)). Further, the optical element unit can be manufactured so that the hollow portion has a humidity lower than that of an atmospheric environment. Moreover, in the manufacturing method for an optical element unit according to the present disclosure, the preparing can include: arranging the first optical element and the second optical element in an apparatus; and forming the inorganic layers in regions including the respective peripheral edge portions of the first optical element and the second optical element which are arranged.

Further, the manufacturing method for manufacturing an optical element unit according to the present disclosure can be a manufacturing method for an optical element unit of manufacturing an optical element unit by bonding a first optical element, a second optical element, and a third optical element at peripheral edge portions thereof, and can include: preparing the first optical element, the second optical element, and the third optical element in which an inorganic layer is provided in a region including a peripheral edge portion of a surface on a bonding side of at least one of the first optical element and the second optical element and another inorganic layer is provided in a region including a peripheral edge portion of a surface on the bonding side of at least one of the second optical element and the third optical element; and bonding the peripheral edge portions of the first optical element, the second optical element, and the third optical element which are prepared so that hollow portions are formed between the first optical element and the second optical element and further between the second optical element and the third optical element on respective inner sides of the peripheral edge portions.

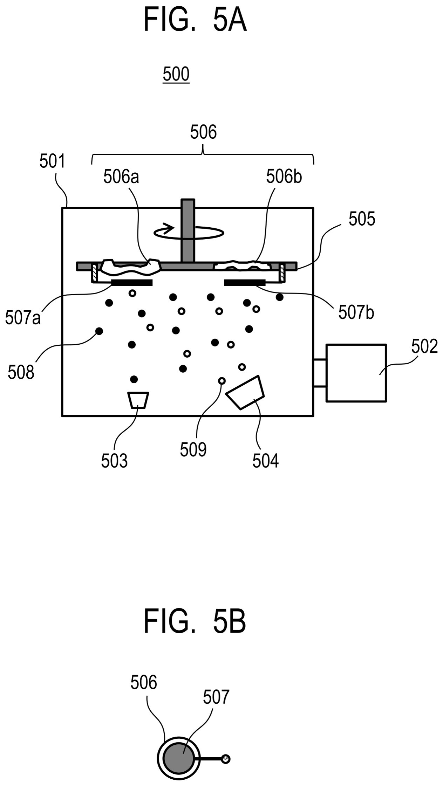

An example of a manufacturing apparatus for and a manufacturing method of manufacturing an optical element unit under a low humidity (low pressure) environment is described. Fig. 5A is a schematic view for illustrating a vacuum film-forming apparatus. A vacuum film-forming apparatus 500 includes a film forming chamber 501, a vacuum pump 502, an evaporation source 503, an assistance source 504, and a optical element holding mechanism 505. Two or more optical elements 506 including an optical element 506a and an optical element 506b are held by the optical element holding mechanism 505, and vacuuming is performed by the vacuum pump 502 down to from about $10^{-5}$ Pa to about $10^{-4}$ Pa. After the vacuuming is performed, the evaporation source 503 is heated by an electron beam or resistance heating so that an a film material 508 is evaporated. With assistance by ions 509 emitted from the assistance source 504, the inorganic layer is formed on each of the optical elements 506a and 506b. In order to form the inorganic layer for bonding at the peripheral edge portion of the optical effective area, film formation is performed while a blocking plate 507 (507a, 507b) is used for blocking. Fig. 5B is a top view of the optical element 506 and the blocking plate 507. With the blocking plate 507 being installed to cover a center portion of the optical element 506, the center portion of the optical element can be blocked and the inorganic layer can be formed at the peripheral edge portion of the optical effective area of the optical element 506. In this embodiment, on a synthetic quartz substrate serving as the optical element 506, Cr and Au are deposited at thicknesses of 5 nm and 10 nm, respectively, in the stated order as the inorganic layer. After the film formation, the film forming chamber 501 is vented and the pressure is returned to the atmospheric pressure, and then the optical element 506 having the inorganic layer formed thereon is taken out.

After the optical element 506 having the inorganic layer formed thereon is taken out from the vacuum film-forming apparatus 500, bonding is performed by a bonding apparatus 600 for bonding a plurality of optical elements to each other.

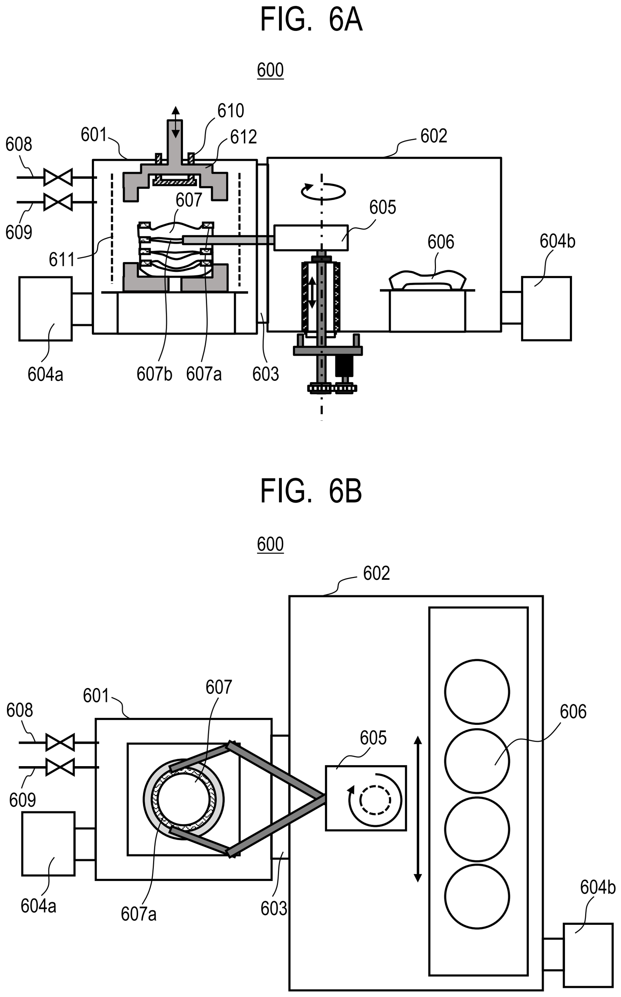

The bonding apparatus is described with reference to Fig. 6A and Fig. 6B. Fig. 6A is a schematic view for illustrating a cross section of the bonding apparatus 600, and Fig. 6B is a schematic view for illustrating a state of the bonding apparatus 600 as viewed from the top. In Fig. 6B, in order to facilitate the understanding, illustration of a heater, electrodes, and the like is omitted. The bonding apparatus 600 includes a bonding chamber 601, a preparation chamber 602, and a gate valve 603. The bonding chamber 601 is kept to have an environment that is always kept in vacuum of from several tens of pascals to several hundreds of pascals by a vacuum pump 604a. First, two or more optical elements to be bonded are installed in the preparation chamber 602. Next, the preparation chamber 602 is subjected to vacuuming by a vacuum pump 604b. When the environment of the bonding chamber 601 and the environment of the preparation chamber 602 become substantially consistent, the gate valve 603 is opened, and the optical elements prepared in the preparation chamber 602 are transferred one by one to the bonding chamber 601 through use of a conveyance hand 605. After the transfer to the bonding chamber 601, the gate valve 603 is closed. Then, an Ar gas is supplied to the bonding chamber 601 from an Ar gas supply line 608, and a voltage is applied to an electrode 610. Thus, plasma is generated to perform surface activation treatment on an inorganic layer 607a formed on an optical element 607 transferred to the bonding chamber 601. Further, depending on the material of the inorganic layer 607a, the optical element 607 may be heated to from about 150°C to about 200°C through use of a heater 611 to enhance the bonding strength.

After the surface treatment of the optical element 607 is completed, voltage application to the electrode 610 is stopped, and Ar supply from the Ar gas supply line 608 is stopped. The gate valve 603 is opened again, and another optical element 606 to be bonded is conveyed from the preparation chamber 602 to the bonding chamber 601 through use of the conveyance hand 605. The optical element 606 is stacked on the optical element 607 that has been transported earlier and subjected to surface activation treatment, and a pressure-bonding arm 612 is lowered so that the two optical elements 606 and 607 are bonded to each other. After that, the gate valve 603 is closed, and surface activation treatment is similarly performed. The next optical element is transported to the bonding chamber 601 and bonded by the pressure-bonding arm 612. This operation is repeated to allow bonding for the optical element unit including two or more optical elements. Through use of the above-mentioned bonding apparatus 600, it is possible to manufacture an optical element unit in which, under a state in which a hollow portion 607b between the optical elements is brought to have a pressure equal to or less than an atmospheric pressure, the first optical element and the second optical element are bonded to each other at the peripheral edge portions thereof through intermediation of the inorganic layer 607a. The pressure and the humidity of the hollow portion 607b can also be adjusted by stopping the vacuum pump 604a and, immediately before the optical elements are bonded, supplying nitrogen from a nitrogen gas supply line 609 while only an opening degree of an exhaust line is adjusted.

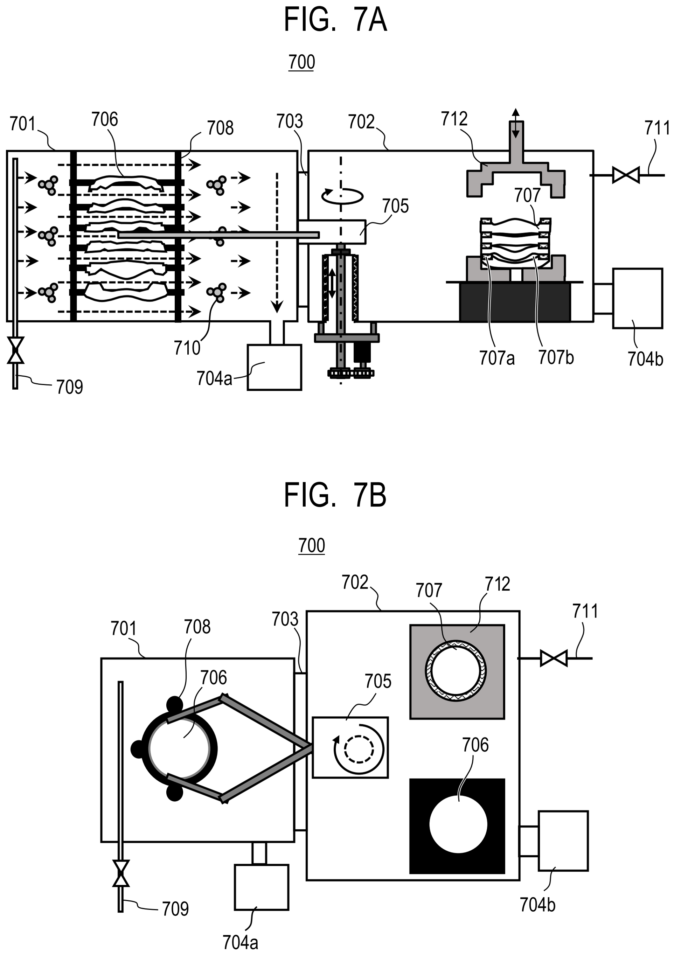

Next, a manufacturing apparatus and a manufacturing method in which formation of the inorganic layer and bonding of the optical element unit are integrated are described. Fig. 7A and Fig. 7B are schematic views for illustrating a vacuum film-forming bonding apparatus in which a vacuum film-forming apparatus and a bonding apparatus are integrated. A vacuum film-forming bonding apparatus 700 includes a film forming chamber 701, a bonding chamber 702, and a gate valve 703. The film forming chamber 701 is kept to have an environment that is always kept in vacuum of from several pascals to several tens of pascals by a vacuum pump 704a. First, two or more optical elements 706 not subjected to film formation and to be bonded are installed in the bonding chamber 702. Next, the bonding chamber 702 is subjected to vacuuming by a vacuum pump 704b. When the environment of the film forming chamber 701 and the environment of the bonding chamber 702 become substantially consistent, the gate valve 703 is opened, and the optical elements 706 not subjected to film formation and prepared in the bonding chamber 702 are transferred one by one to the film forming chamber 701 through use of a conveyance hand 705. After all of the optical elements 706 not subjected to film formation are sequentially transferred to an optical element holding stage 708 of the film forming chamber 701, the gate valve 703 is closed. The film forming chamber 701 is an ALD film forming apparatus, and supplies a gas 710 such as a raw material gas or an oxidizing agent from a gas supply line 709. In this example, the number of gas supply lines is described as one, but a raw material gas supply line and an oxidizing gas supply line for supplying an oxidizing agent are normally separated into two lines in order to avoid film deposition in a pipe due to reaction between the raw material gas and the oxidizing gas in the pipe. For example, SAM24 is used as the raw material gas and a high concentration ozone of 85% or more is used as the oxidizing agent so that a $SiO_2$ film can be formed on the entire surface of the optical element at a substrate temperature of 75°C. In the ALD film formation method, four steps of raw material supply, purge, oxidizing gas supply, and purge are assumed as one cycle to form one atomic layer. This cycle is repeated to form a $SiO_2$ film at a thickness of 10 nm as the inorganic layer 707a on the substrate. As this substrate, for example, ZEONEX (trademark) or the like can be used. After the film formation, the gate valve 703 is opened, and the optical elements each having the inorganic layer 707a formed thereon are stacked one by one in the bonding chamber 702 through use of the conveyance hand 705. After all of optical elements 707 subjected to film formation are transported, the gate valve is closed, and a pressure-bonding arm 712 is lowered so that the optical elements 707 are bonded to each other at normal temperature in vacuum.

Through use of the above-mentioned vacuum film-forming bonding apparatus 700, it is possible to manufacture an optical element unit in which, under a state in which the hollow portion is brought to have a pressure equal to or less than an atmospheric pressure, the first optical element and the second optical element are bonded to each other through intermediation of solid-phase bonding of an inorganic substance formed at the peripheral edge portions thereof . The pressure and the humidity of a hollow portion 707b can also be adjusted by stopping the vacuum pump 704a and, immediately before the optical elements are bonded, supplying nitrogen from a nitrogen gas supply line 711 while only the opening degree of the exhaust line is adjusted.

[Other Embodiments]

The present disclosure is not limited to the embodiment and Example described above, and many modifications may be made thereto within the technical idea of the present disclosure.

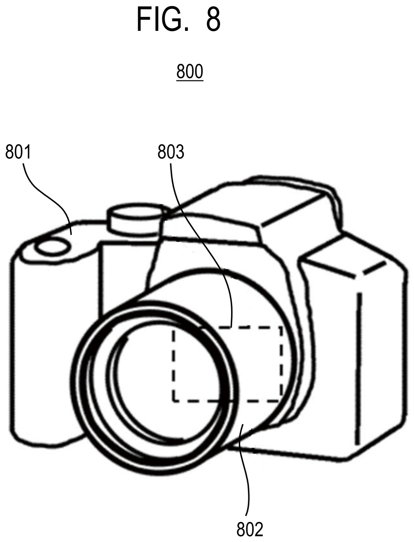

The present disclosure is widely applicable to coating of an optical element such as a lens, a filter, a mirror, a prism, an image pickup element (image sensor), or a display element (display). Moreover, the present disclosure is applicable to an optical apparatus including the optical element unit, such as various cameras, an interchangeable lens, or portable electronic equipment. The optical apparatus according to the present disclosure can include the optical element unit according to the present disclosure. Those optical apparatus may include, in addition to a plurality of optical components including the optical element unit, a holding component (lens barrel) for holding the plurality of optical components. With the optical element unit according to the present disclosure being provided, the imaging performance can be increased, and the environmental resistance can also be enhanced. Fig. 8 is a schematic view for illustrating an example of the optical apparatus according to the present disclosure. A camera 800 includes a main body 801, an interchangeable lens 802, and an optical element unit 803 according to the present disclosure.

The embodiment described above can be changed as appropriate without departing from the technical idea. For example, a plurality of embodiments can be combined. Further, a matter of a part of at least one embodiment can be deleted or replaced. Further, a new matter can be added to at least one embodiment.

Contents disclosed in this specification include not only contents explicitly described in this specification but also all matters that can be grasped from this specification and the drawings attached to this specification. Further, the contents disclosed in this specification include a complementary set of individual concepts described in this specification. That is, for example, when this specification has a description of "A is B," this specification is considered to disclose a case in which "A is not B" even when a description of a case in which "A is not B" is omitted in this specification. This is because, when there is a description of "A is B," taking into consideration a case of "A is not B" is a premise.

[Examples]

[Examples 1 to 3 and Comparative Examples 1 and 2]

Examples 1 to 3 that are based on the embodiment of the present disclosure are described. At a peripheral edge portion of each of two optical elements being synthetic quartz, a $SiO_2$ film was formed at a thickness of 10 nm by vacuum deposition as the inorganic layer. There were prepared three types of optical element units in which bonding was performed with the humidity and the pressure of the hollow portion on the inner side of the peripheral edge portion being changed. Specifically, when bonding was performed in the atmospheric pressure, the optical elements were put into a constant temperature and humidity bath in which the temperature and the humidity were able to be managed to be constant, and were stabilized for a certain time period. Then, the optical elements were bonded to each other so that the hollow portion had a desired humidity. When bonding was performed in vacuum, the optical elements to be bonded were put into a chamber connected to a vacuum pump, and the inside of the chamber was evacuated to a vacuum by the vacuum pump. At the time of pressure adjustment, the vacuum pump was stopped, and, while the pressure was monitored with a vacuum gauge, a clean dry air (CDA) or a nitrogen gas was introduced with the flow rate being controlled with a flow meter. After the pressure of the vacuum gauge reached a predetermined pressure, gas supply was stopped, and the optical elements were bonded to each other. In this manner, an optical element unit including a hollow portion having a desired humidity and pressure was obtained. The vacuum deposition was performed as follows. Through use of BMC850 manufactured by SHINCRON CO., LTD., as generally performed, $SiO_2$ granulated powder that was put into a crucible as the evaporation source was evaporated by an electron beam, and, while an Ar gas and an $O_2$ gas were used to perform ion assistance, film formation was performed at the peripheral edge portion of the optical element through use of a blocking plate.

As Comparative Examples, there were prepared two types of optical element units each including a hollow portion obtained by bonding peripheral edge portions of two pieces of synthetic quartz with, as a bonding material, an epoxy-based adhesive at a thickness of about 2 μm.

Regarding the humidity and the pressure of the hollow portion of the optical element unit obtained by bonding, third harmonic light of a YAG laser having a wavelength of 355 nm was applied from the outside, and Raman scattered light was measured. Thus, presence or absence of $N_2$, $O_2$, and $H_2O$ and relative amounts thereof were evaluated from the intensity of the Raman wavelength. Table 1 shows a Raman scattering wavelength and a relative intensity at the time of laser light irradiation of a wavelength of 355 nm. In the following expression, MR, $I_{H2O}$, and $I_{N2}$ represent a humidity ratio (g/kg), a Raman intensity of $H_2O$, and a Raman intensity of $N_2$ of the hollow portion, respectively, and $MR_0$, $I_{0-H2O}$, and $I_{0-N2}$ represent a humidity ratio (g/kg), a Raman intensity of $H_2O$, and a Raman intensity of $N_2$ outside of the optical element unit, respectively. Regarding the pressure, a correlation between an intensity at the Raman wavelength of $N_2$ and a pressure acquired with the Pirani gauge was acquired and calibrated to achieve a pressure value calculated from the Raman intensity of $N_2$.

$$MR = MR_0 \times \frac{I_{0-H2O}}{I_{0-N2}} \times \frac{I_{H2O}}{I_{N2}}$$

Here, the humidity ratio $MR_0$ of the outside was measured as follows. First, through use of a thermo-hygrometer, a temperature and a relative humidity of an external environment were measured. Then, the saturation water vapor pressure was obtained from the temperature, and the actual water vapor pressure was calculated from the relative humidity. A saturation water vapor pressure Ps was calculated by the following Tetens equation through use of a temperature T (°C).

$$Ps = 6.1078 \times 10^{(7.5T/(T+237.3))}$$

A water vapor pressure Pv was calculated by the following expression through use of a relative humidity RH (%).

$$Pv = RH/100 \times Ps$$

The humidity ratio $MR_0$ was calculated by the following expression through use of Ps and Pv obtained as described above, a molar mass Mv (18.01528 g/mol) of water vapor, and a molar mass $M_{DA}$ (28.966 g/mol) of dry air.

$$MR_0 = Mv/M_{DA} \times Pv/(P-Pv)$$

In this expression, P represents an atmospheric pressure (normally 1,013.25 hPa).

[Table 1]

| Gas type | Raman wavelength (nm) | Relative intensity, relative to $N_2$ |
|---|---|---|
| $O_2$ | 375.4 | 1.6 |
| N2 | 386.7 | 1 |
| $H_2O$ | 407.5 | 2.8 |

As evaluation of the optical element unit obtained by bonding, a high temperature and high humidity test was performed through use of an environmental testing machine of SH-642 manufactured by ESPEC CORP. under conditions of 70°C, 80%, and 50 h, and an external appearance change was evaluated. An optical element unit having no smearing of a bonding portion was evaluated as A, and an optical element unit having smearing was regarded as having a positional misalignment and was evaluated as C. Further, a temperature difference that caused dew formation at the time of rapid cooling from the room temperature of 25°C was evaluated. A case of 60°C or more was evaluated as A, a case of 30°C or more and less than 60°C was evaluated as B, and a case of less than 30°C was evaluated as C. Table 2 shows a bonding material, a bonding thickness, a humidity ratio and a pressure of the hollow portion, and evaluation results of each of the optical element units manufactured in Examples 1 to 3 and Comparative Examples 1 and 2.

[Table 2]

| | Bonding material | Bonding thickness | Humidity ratio (g/kg) | Pressure (Pa) | High temperature and high humidity test 70°C, 80%, 50 h | Temperature difference that causes dew formation |
|---|---|---|---|---|---|---|
| Example 1 | Inorganic film | 20 nm | 2.0 | 101,325 | A | B |
| Example 2 | Inorganic film | 20 nm | 0.9 | 101,325 | A | B |
| Example 3 | Inorganic film | 20 nm | 1.0 | 30,000 | A | A |
| Comparative Example 1 | Adhesive | 2 μm | 9.9 | 101,325 | C | C |
| Comparative Example 2 | Adhesive | 2 μm | 2.0 | 101,325 | C | B |

It is understood from the results of Example 1 to Example 3 and Comparative Examples 1 and 2 that an optical element unit obtained by bonding through intermediation of an inorganic film has no problem in the high temperature and high humidity test, and further, when the humidity and the pressure of the hollow portion are reduced to be low, occurrence of dew formation can be suppressed for a wide temperature range.

Synthetic quartz has been used as the glass material of the optical element, but the present disclosure is not limited thereto. All glasses, resin lenses, and films on which solid-phase bonding of an inorganic substance can be formed may be used. Further, the optical elements to be bonded may have different glass types.

Further, the bonding portion may be formed of a material that absorbs light when the bonding portion is provided on the surface of the optical element and is provided only on the outer side (peripheral edge portion) of the optical effective area in which light is transmitted through the optical element. The bonding portion (inorganic film) for bonding two optical elements is not limited to those described in Examples, and may be: a metal-based film of a metal, such as Au, Pt, Ag, Ti, Al, W, or Si; an oxide film of an oxide, such as $Al_2O_3$, $SiO_2$, $SiO_x$, MgO, $Y_2O_3$, $ZrO_2$, or $Nb_2O_5$; a nitride film of a nitride, such as

AlN, $Si_3N_4$, or TiN; and a fluoride film of a fluoride, such as $AlF_3$, $MgF_2$, or $LaF_3$.

[Examples 4 to 7 and Comparative Example 3]

Examples 4 to 7 that are based on the embodiment of the present disclosure and Comparative Example 3 are described. At a peripheral edge portion of each of two pieces of synthetic quartz, an $Al_2O_3$ film was formed as the inorganic layer by the atomic layer deposition method (ALD method), and bonding was performed. AD-1 manufactured by SUMCO Corporation was used as an apparatus of the atomic layer deposition method. Trimethylaluminum (TMA) was used as the raw material gas, and $H_2O$ was used as the oxidizing agent. Film formation was performed by performing raw material gas supply of 20 ms, purge of 10 s, oxidizing agent supply of 20 ms, and purge of 10 s for one cycle, 100 cycles, 1,000 cycles, 4,000 cycles, and 5,000 cycles.

[Table 3]

|  | Bonding material film thickness | Surface roughness | Bonding result |
|---|---|---|---|
| Example 4 | 0.2 nm | 0.3 nm | A |
| Example 5 | 21 nm | 0.4 nm | A |
| Example 6 | 232 nm | 0.6 nm | A |
| Example 7 | 854 nm | 0.9 nm | A |
| Comparative Example 3 | 1,015 nm | 1.1 nm | C |

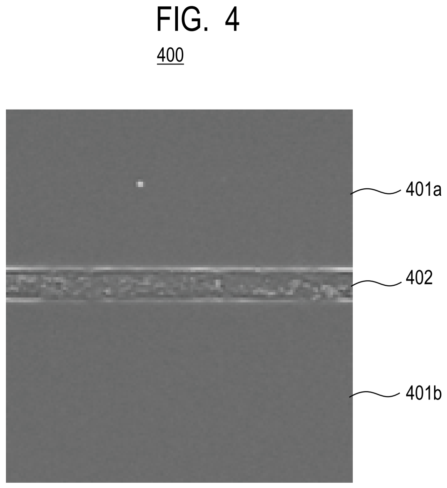

Fig. 4 shows a cross-sectional SEM image in Example 7 in which two optical elements are bonded to each other by the inorganic film. Cross-sectional SEM observation was performed by isometrically cutting the optical element unit and polishing the cross section, and then observing the cross section by a GeminiSEM 560 at an acceleration voltage of 1 kV. Fig. 4 shows an optical element unit 400 in which two optical elements are bonded to each other through intermediation of the inorganic film. In Example 7, an optical element 401a and an optical element 401b that were synthetic quartz lenses were used as the two optical elements. When a film thickness of a bonding material of the optical element unit obtained by bonding through intermediation of an $Al_2O_3$ film as an inorganic film 402 was evaluated, the film thickness was 232 nm. Also for other Examples and Comparative Example, the film thickness and the bonding state were similarly evaluated. The bonding state was evaluated by hanging one optical element for each optical element unit and installing a weight to apply a force of 0.05 N to the other optical element. An optical element unit having no peel-off after suspension was evaluated as A, and an optical element unit having peel-off after suspension was evaluated as C.

The surface roughness of the surface of the inorganic layer was evaluated through use of an atomic force microscope AFM.

It is understood from Examples 4 to 7 that bonding can be satisfactorily performed when the surface roughness is less than 1 nm.

Further, when the film thickness of the inorganic film is equal to or more than two atomic layers (equal to or more than 0.2 nm), the optical elements can be satisfactorily bonded to each other. It is desired that the surface roughness of each of the two optical elements 401a and 401b to be bonded and the surface roughness of the inorganic layers to be formed on the optical elements 401a and 401b be small. When the surface roughness becomes smaller, the surfaces of the two optical elements neatly come into contact with each other when the two optical elements 401a and 401b are bonded to each other, and hence the surface area of bonding is increased and the bonding strength is increased. In order to ensure a sufficient bonding strength, it is desired that the surface roughness of each of the optical element 401a and the optical element 401b in a state of having the inorganic layers attached thereto be sufficiently small. The surface roughness is desirably Ra<1 nm, more preferably Ra<0.5 nm. In general, when the film thickness of the inorganic layer formed on the optical element is increased, the surface roughness is increased. Accordingly, it is desired that the film thickness of the inorganic film 402 be less than 1 $\mu$m.

Various embodiments have been described in detail above but it will be understood that the present disclosure is not limited to these embodiments and encompasses all modifications, variants, alternatives and equivalents falling within the scope of the appended claims.

**Claims**

1. An optical element unit comprising a first optical element and a second optical element,

wherein the first optical element and the second optical element are bonded to each other through intermediation of a bonding portion formed by solid-phase bonding of an inorganic substance between a peripheral edge portion of the first optical element and a peripheral edge portion of the second optical element, and

wherein the optical element unit has, between the first optical element and the second optical element which are bonded to each other, a hollow portion formed on an inner side of the peripheral edge portion.

2. The optical element unit according to claim 1, wherein the bonding portion is an inorganic film formed by solid-phase bonding between an inorganic layer provided at the peripheral edge portion of the first optical element and an inorganic layer provided at the peripheral edge portion of the second optical element.

3. The optical element unit according to claim 2, wherein the inorganic film includes at least one selected from the group consisting of a metal film, an oxide film, a nitride film, and a fluoride film.

4. The optical element unit according to claim 2, wherein the inorganic film includes a dielectric film.

5. The optical element unit according to claim 2, wherein the inorganic film includes an oxide film which contains a carbon atom and a hydrogen atom.

6. The optical element unit according to claim 2, wherein the inorganic film contains at least one of $SiO_2$, $Al_2O_3$, $Nb_2O_5$, $Ta_2O_5$, $HfO_2$, $MgO$, $Y_2O_3$, $ZrO_2$, $ZnO$, $MgF_2$, $AlF_3$, $AlN$, $Si_3N_4$, and $SiOC$.

7. The optical element unit according to any one of claims 1 to 6, wherein the hollow portion has a humidity lower than a humidity of an atmospheric environment.

8. The optical element unit according to any one of claims 1 to 7, wherein the bonding portion is provided in a region that is at the peripheral edge portion of the first optical element and the peripheral edge portion of the second optical element and is outside an optical effective area.

9. The optical element unit according to any one of claims 1 to 8, wherein the hollow portion is formed at an optical axis position of the optical element unit.

10. The optical element unit according to any one of claims 1 to 9, wherein the hollow portion has a humidity ratio of 2 g/kg or less.

11. The optical element unit according to any one of claims 1 to 10, further comprising a dielectric film between the bonding portion and at least one of the first optical element and the second optical element.

12. The optical element unit according to any one of claims 1 to 11, wherein the bonding portion extends between the hollow portion and at least one of the first optical element and the second optical element.

13. The optical element unit according to any one of claims 1 to 12, wherein the bonding portion has a thickness of 0.1 nm or more and less than 1 $\mu$m.

14. The optical element unit according to any one of claims 1 to 13, wherein the hollow portion has a pressure that is equal to or less than an atmospheric pressure.

15. The optical element unit according to any one of claims 1 to 14, further comprising a third optical element, wherein the second optical element and the third optical element are bonded to each other through intermediation of a bonding portion formed by solid-phase bonding of another inorganic substance between the peripheral edge portion of the second optical element and a peripheral edge portion of the third optical element.

16. The optical element unit according to claim 15, wherein the optical element unit has, between the second optical element and the third optical element which are bonded to each other, another hollow portion formed on the inner side of the peripheral edge portion.

17. An optical apparatus comprising:

a plurality of optical components including the optical element unit of any one of claims 1 to 16; and

a holding component for holding the plurality of optical components.

18. A manufacturing method for an optical element unit of manufacturing an optical element unit, the manufacturing method comprising:

preparing a first optical element and a second optical element in which an inorganic layer is provided in a region including a peripheral edge portion of a surface on a bonding side of at least one of the first optical element and the second optical element; and

solid-phase bonding the peripheral edge portions of the first optical element and the second optical element which are prepared so that a hollow portion is formed between the first optical element and the second optical element on an inner side of the peripheral edge portion.

19. The manufacturing method according to claim 18, wherein the bonding is performed in vacuum.

20. The manufacturing method according to claim 18 or 19, wherein the preparing includes:

arranging the first optical element and the second optical element in an apparatus; and

forming inorganic layers in regions including the respective peripheral edge portions of the first optical element and the second optical element which are arranged.

21. The manufacturing method according to any one of claims 18 to 20 comprising:

preparing a third optical element in which another inorganic layer is provided in a region including a peripheral edge portion of a surface on the bonding side of at least one of the second optical element and the third optical element; and

solid-phase bonding the peripheral edge portions of the second optical element and the third optical element which are prepared so that a hollow portion is formed between the second optical element and the third optical element on an inner side of the peripheral edge portion.

# FIG. 1

100

# FIG. 2A

200

202

204

203

# FIG. 2B

201a  201b

205

202

203

204

# FIG. 2C

204

201a  201b

206a  206b

# FIG. 2D

210

212

214

213

# FIG. 2E

211a  211b

215

212

213

214

# FIG. 2F

214

211a

211b

216a

216b

# FIG. 3

300

301a

303a

302

303b

301b

# FIG. 4

400

401a

402

401b

# FIG. 5A

500

# FIG. 5B

# FIG. 6A

# FIG. 6B

# FIG. 7A

700

# FIG. 7B

700

# FIG. 8

800

801　　803

802

# EUROPEAN SEARCH REPORT

**Application Number**

EP 25 21 4203

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/186478 A1 (WATANABE JOJI [JP] ET AL) 12 December 2002 (2002-12-12) | 1-3, 7-10,12, 14,15,17 | INV. C03B23/22 G02B7/02 |
| A | * paragraphs [0017], [0045] - [0049]; figures 7-12 * | 5,16, 18-21 | |
| X | US 2021/137372 A1 (FUJIMORI NORIYUKI [JP]) 13 May 2021 (2021-05-13) | 1-4,6-9, 11-14, 17-20 | |
| A | * paragraphs [0072] - [0100]; figure 14 * | 5,16,21 | |
| X | US 2014/083597 A1 (KALKOWSKI GERHARD [DE] ET AL) 27 March 2014 (2014-03-27) | 1,3,4, 6-9, 12-14, 17-20 | |
| A | * paragraphs [0001] - [0061]; figures 1-4 * | 5,16,21 | |
| A | US 2012/161177 A1 (KIM JOON-HYUNG [KR]) 28 June 2012 (2012-06-28) * paragraphs [0001] - [0088]; figures 1,2 * | 1-21 | |

**TECHNICAL FIELDS SEARCHED (IPC)**

C03B
G02B

The present search report has been drawn up for all claims

| Place of search | Date of completion of the search | Examiner |
|---|---|---|
| Munich | 17 March 2026 | Baur, Christoph |

# EP 4 741 356 A1

## ANNEX TO THE EUROPEAN SEARCH REPORT
## ON EUROPEAN PATENT APPLICATION NO.

EP 25 21 4203

17-03-2026

| Patent document cited in search report | Publication date | Patent family member(s) | Publication date |
|---|---|---|---|
| US 2002186478 A1 | 12-12-2002 | DE 10225378 A1 | 26-06-2003 |
| | | JP 3985466 B2 | 03-10-2007 |
| | | JP 2002365560 A | 18-12-2002 |
| | | US 2002186478 A1 | 12-12-2002 |
| US 2021137372 A1 | 13-05-2021 | CN 112189258 A | 05-01-2021 |
| | | US 2021137372 A1 | 13-05-2021 |
| | | WO 2020008618 A1 | 09-01-2020 |
| US 2014083597 A1 | 27-03-2014 | DE 102011012835 A1 | 23-08-2012 |
| | | EP 2678287 A1 | 01-01-2014 |
| | | US 2014083597 A1 | 27-03-2014 |
| | | WO 2012113787 A1 | 30-08-2012 |
| US 2012161177 A1 | 28-06-2012 | KR 20120071960 A | 03-07-2012 |
| | | US 2012161177 A1 | 28-06-2012 |

EPO FORM P0459

**EP 4 741 356 A1**

**Patent documents cited in the description**

- JP 2007195167 A

- JP 2005292441 A